# EUROPEAN PATENT SPECIFICATION

(11) **EP 0 937 606 B1**
(45) Date of publication and mention of the grant of the patent: **28.06.2006**
(21) Application number: 99660020.1
(22) Date of filing: 03.02.1999
(51) Int. Cl.: B60P 3/22, B60P 3/42, B60P 3/24

(54) **Transport device comprising a tank construction**
Transportvorrichtung mit einem Tank
Dispositif de transport comportant un réservoir

(30) Priority: 18.02.1998 FI 980371
(43) Date of publication of application: 25.08.1999
(73) Proprietor: Oktaedri Oy, 00370 Helsinki (FI)
(72) Inventor: Saalasti, Teijo Tapio, 02940 Espoo (FI)
(74) Representative: Svensson, Johan Henrik

(56) References cited:
- GB-A- 648 146
- GB-A- 947 534
- GB-A- 1 522 609
- GB-A- 2 298 830
- SE-B- 414 487
- US-A- 2 369 890
- US-A- 2 503 792

## Description

The invention relates to a transport device comprising a platform for goods to be transported and a tank construction underneath the platform for liquid material to be transported, which may be in the form of a fluid or a powder. A platform design commonly used for the transport of goods is a flat general cargo platform.

The invention relates specifically to a transport device which can be used in vehicles, primarily in "dual purpose" tankers. The transport device of the invention is suitable for use both in a drawing vehicle and in various trailer combinations.

Dual purpose tankers are characterised by the fact that they comprise a tank portion for liquids or powders and a platform portion for general cargo. Such dual purpose tankers are used particularly when the vehicle is used to transport alternately or simultaneously both liquids or powders in the tank and general cargo on the platform. A dual purpose tanker has the advantage of more versatile use than an ordinary tanker which transports liquids alone, and thus it will be easier to find it a return load of general cargo after the liquid load. This enables the vehicle to return with a load, so that profitable use can be made of it also on the return journey as it collects another liquid load. This shortens the payoff period of such a vehicle, at the same time as it provides energy savings and causes a lower impact on the environment per ton kilometre driven than does an ordinary tanker which carries load only in one direction and returns empty.

A tank design which is rectangular or partly elliptic in cross-section is the most commonly used design in dual purpose tankers nowadays. An example of this are the MEPA® tankers, which have been manufactured for more than thirty years for different European and African countries (MEPA is a registered trademark of Saalasti Oy). Such tank designs are low and require small space, thus providing a maximum of space for the general cargo. A similar vehicle is known from GB 2 298 830 A, disclosing all features of the preamble of claim 1.

In addition, it is previously known to manufacture a tank platform consisting of two or more adjacent, basically cylindrical vessels, whose longitudinal axis is either parallel or transverse to the direction of travel of the vehicle. These separate cylindrical vessels also withstand pressure.

DE lay out print 1 284 855 discloses a self-supporting tank wagon design, which comprises a plurality of successive, overlapping spherical vessels in the direction of travel of the vehicle.

EP Patent Application 0 013 624 discloses a tank for storing liquefied gases, which consists of a plurality of parallel, intersecting cylinders, which are mutually separated by means of partitions in order to provide a plurality of separate compartments.

DE Patent Application 22 35 995 discloses a cargo container consisting of two intersecting cylindrical tank portions surrounded by a frame construction.

In order to save hold cargo space in a ship, SE lay out print 414 487 discloses the manufacture of tanks consisting of intersecting spherical vessels supported by a spacer plate at their points of intersection. Such tanks can also be composed of two spherical vessels of different sizes.

WO 94/18029 discloses a silo vehicle, in which the container comprises at least a semi-cylindrical upper shell and at least a semi-cylindrical lower shell, the opposite connecting lines between the upper and lower shell being connected with tension rods. The height of this container is larger than its width, and due to its cylindrical shape, it is not fit for use as a platform for carrying general cargo.

Prior art tank designs have the following shortcomings, which the present invention is intended to eliminate.

If the tank is manufactured with a flat cross-section and level surfaces or surfaces whose radius of curvature is typically at least the double of the smallest diameter of the tank, the tank will have poor pressure resistance and will be inadequate for purposes requiring high pressure resistance.

The use of adjacent cylindrical vessels in the vehicle does yield a pressure-proof construction, it is true, but the useful cross-sectional area of the entire tank relative to the cross-sectional area underneath the platform will be small, entailing waste of space. This results in a high tank construction and reduced space available for general cargo.

The object of the invention is specifically to provide a transport device comprising a tank construction, in which the tank construction withstands pressure well compared to flat, rectangular or partly elliptic tank designs, and in which the portion underneath the general cargo platform can be utilised almost entirely as a tank, in which a play can be provided for the wheels without increasing the height of the entire tank construction, in which the height of the general cargo platform can be minimised and in which the tank simultaneously acts as a support construction for the general cargo platform over its entire length, also in the vicinity of the platform edges, thus requiring a minimum of additional support.

These objects have been achieved with the transport device of the invention, whose characteristic features are disclosed in the accompanying claims.

Thus, in accordance with the invention, a transport device has been provided, which comprises a platform for goods to be transported and a tank construction underneath the platform for liquid material to be transported, the tank construction comprising at least two parallel, substantially horizontal and substantially cylindrical part vessels, adjacent part vessels intersecting over their length and being interconnected at their points of intersection, and said platform bearing against the tank construction.

In this context, the term "cylinder" and "cylindrical", respectively, are intended to mean a circular cylinder or a cylinder which is circular or almost circular in cross-section.

The cylindrical part vessels mentioned above are preferably elongated and their longitudinal axis is preferably parallel to the direction of travel of the transport device.

In the transport device in accordance with the invention, in the shear plane between adjacent part vessels, a support construction is provided within the tank construction, which is preferably a support wall with openings which enable the material to be transferred from one part vessel to another. This support construction may also consist of pillar-like supports fitted suitably spaced after each other over the length of the tank construction.

In accordance with the invention, the shear plane between two adjacent part vessels preferably forms an angle of approx. 0-30° with the vertical plane, implying that the support construction mentioned above forms an equal angle with the vertical plane. This support construction is substantially vertical in a particularly preferred embodiment. Such a vertical support construction carries the platform load and transmits stresses caused by the pressure between the lower and upper portions of the cylinder mantle.

The tank construction of the transport device of the invention preferably comprises at least three substantially cylindrical part vessels. The two outmost part vessels then preferably have substantially the same radius of curvature, which is smaller than that of the part vessel or vessels located between them. Owing to this design, the lower surface of the outmost part vessels is located on a higher horizontal level than the lower surface of the part vessel or vessels placed between these, so that there will be space available for the wheels and other chassis parts at the outmost part vessels. This design allows the transport device to be placed on top of the vehicle chassis, or in the case of a trailer, on the axes, without the tank rising to an unreasonable height.

The top mantle portion of the central part vessel or vessels may have a radius of curvature larger than that of the lower mantle portion. Owing to these differences in the radius of curvature of the top and bottom portion of the part vessel, the support construction is better vertically positioned, thereby enhancing transmission of forces.

In the transport device of the invention, the upper surface of the part vessels is basically located in substantially the same horizontal plane, thus providing a support for the platform.

The tank design of the transport device of the invention is substantially symmetrical with the longitudinal vertical plane located in the centre in its lateral direction. The tank design of the transport device of the invention may be symmetrical or asymmetrical with its longitudinal horizontal plane.

The outmost part vessel of the transport device of the invention is connected to the adjacent part vessel in the area of the sector of the outmost part vessel, which is preferably in the range from approx. 90 to 180°.

In a trailer embodiment, the transport device of the invention can advantageously be performed as self-supporting.

The tank construction of the transport device of the invention is preferably made so as to withstand pressure, for instance a pressure in the range of approx. 1 to 10 bar.

The invention is described in greater detail below with reference to the accompanying drawings, in which
- figure 1: shows a lateral view of the transport device of the invention, partly split in the plane A-A,
- figure 2: shows the construction of figure 1 in cross-section and
- figure 3: shows a second transport device of the invention in cross-section.

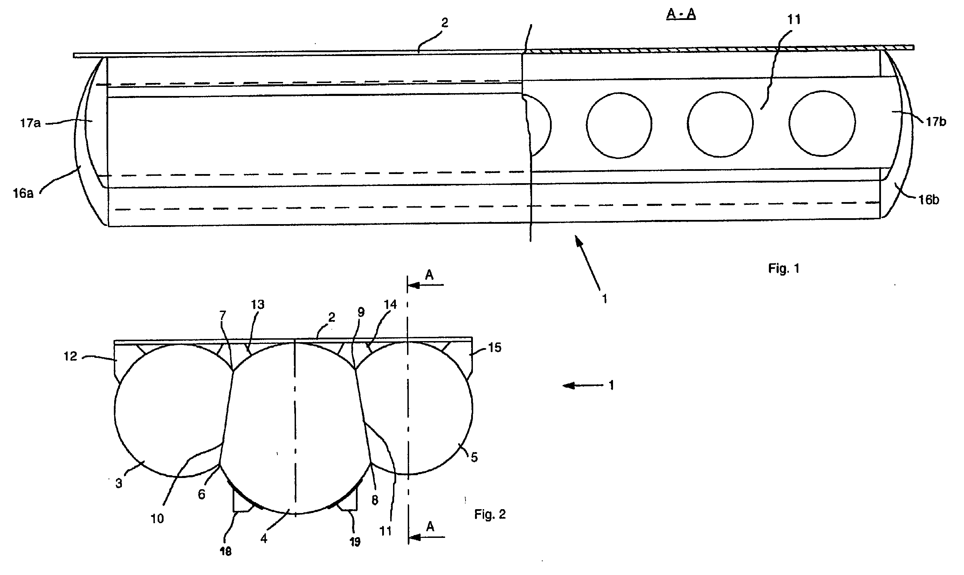

Figures 1 and 2 illustrate a transport device of the invention comprising a tank construction 1 and a platform 2 fitted above it. Tank construction 1 consists of three adjacent, intersecting cylinders 3, 4 and 5. The cylinders are made of steel or aluminium. Cylinders 3 and 4 are interconnected by welding at their points of intersection 6 and 7 by means of a support wall 10 provided with openings. Similarly, cylinders 5 and 4 are interconnected by welding at their points of intersection 8 and 9 by means of a support wall 11 provided with openings.

The first purpose of support walls 10 and 11 is to transmit forces caused by the pressure within the tank between the upper and lower portions so that they compensate each other either totally or at least mainly, so that the mantle is only or mainly subjected to a tensile stress parallel to the tangent of the mantle, and their second purpose is to transmit loads caused by the general cargo load on the platform to longitudinal beams 18 and 19 and further to the chassis of the lorry or the attachment points of the axes, thus preventing the construction from being compressed when loaded from above.

In addition, on the upper surface of cylinders 3, 4 and 5, a steel profile 13 forming a support construction for the platform has been attached to connect cylinders 3 and 4, and a steel profile 14 forming a support construction for the platform has been attached to connect cylinders 4 and 5. In addition, at the outmost upper edge of cylinder 3, a steel profile 12 has been attached to form a support construction for the platform, and at the outmost upper edge of cylinder 5, a steel profile 15 has been attached to form a support construction for the platform.

At the ends of cylinders 3, 4 and 5, convex end portions 16a and 17a and 16b and 17b have been attached by welding (cf. figure 1).

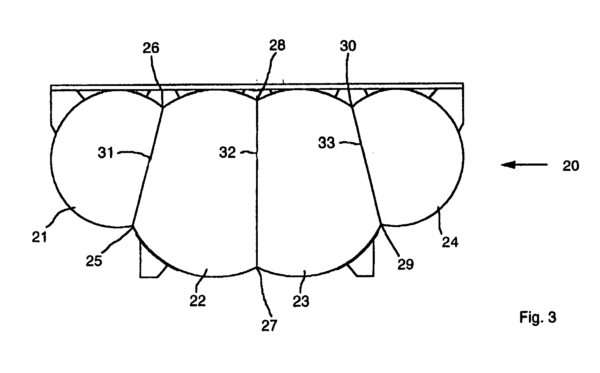

Figure 3 illustrates a second transport device of the invention. The tank construction 20 of this transport device consists of four adjacent, intersecting cylinders 21, 22, 23 and 24. Cylinders 21 and 22 are interconnected by welding at their points of intersection 25 and 26 by means of a support wall 31. Cylinders 22 and 23 are interconnected by welding at their points of intersection 27 and 28 by means of a support wall 32. Cylinders 23 and 24 are interconnected by welding at their points of intersection 29 and 39 by means of a support wall 33. As in the design shown in figure 2, support walls 31, 32 and 33 are equipped with openings. The tank construction 20 illustrated in figure 3 can be made lower than that of figure 2. In this case, the two central cylinders 22 and 23 have equal radii of curvature and the two outmost cylinders 21 and 24 have smaller radii of curvature.

## Claims

1. A transport device comprising a platform (2) for goods to be transported and a tank construction (1; 20) underneath the platform for liquid material to be transported, **characterised in that** the tank construction (1; 20) comprises at least two parallel, substantially horizontal and substantially cylindrical part vessels (3, 4, 5; 21, 22, 23, 24), adjacent part vessels intersecting over their length and being interconnected at their points of intersection (6, 7, 8, 9; 25, 26, 27, 28, 29, 30), and **in that** said platform (2; 34) bears against the tank construction.

2. A transport device as claimed in claim 1, **characterised in that** a support construction (10, 11; 31, 32, 33) is provided within the tank construction in the shear plane between the part vessels.

3. A transport device as claimed in claim 2, **characterised in that** the support construction comprises a support wall (10, 11; 31, 32, 33) with openings.

4. A transport device as claimed in any of the preceding claims, **characterised in that** the tank construction comprises ar least three substantially cylindrical part vessels (3, 4, 5; 21, 22, 23, 24).

5. A transport device as claimed in claim 4, **characterised in that** the two outmost part vessels (3, 5; 21, 24) have substantially the same radius of curvature, which is smaller than the radius of curvature of the part vessel (4) or vessels (22, 23) located between them.

6. A transport device as claimed in claim 5, **characterised in that** the top mantle portion of the central part vessel or vessels has a radius of curvature larger than the radius of curvature of the lower mantle portion.

7. A transport device as claimed in any of the preceding claims, **characterised in that** the shear plane between two adjacent part vessels forms an angle of approx. 0-30° with the vertical plane.

8. A transport device as claimed in any of the preceding claims, **characterised in that** the upper surfaces of the part vessels are located substantially in the same horizontal plane, thus forming a support for the platform.

9. A transport device as claimed in any of the preceding claims, **characterised in that** the tank construction is substantially symmetrical relative to the longitudinal vertical plane located in the centre in its lateral direction.

10. A transport device as claimed in any of the preceding claims, **characterised in that** the outmost part vessel (3, 5; 21, 24) is connected to the adjacent part vessel (4; 22, 23) in the area of the sector of the outmost part vessel, which is in the range from approx. 90 to 180°.

## Patentansprüche

1. Transportvorrichtung, umfassend eine Plattform (2) für zu transportierende Güter und eine Tankkonstruktion (1; 20) unterhalb der Plattform für flüssiges, zu transportierendes Material,
**dadurch gekennzeichnet, dass** die Tankkonstruktion (1; 20) mindestens zwei parallele, im wesentlichen horizontale und im wesentlichen zylindrische Teilgefäße (3, 4, 5; 21, 22, 23, 24) aufweist, wobei sich benachbarte Teilgefäße entlang ihrer Länge schneiden und an ihren Schnittstellen (6, 7, 8, 9; 25, 26, 27, 28, 29, 30) miteinander verbunden sind, und dass die Plattform (2; 34) auf der Tankkonstruktion aufliegt.

2. Transportvorrichtung nach Anspruch 1,
**dadurch gekennzeichnet, dass** eine Trägerkonstruktion (10, 11; 31, 32, 33) innerhalb der Tankkonstruktion vorgesehen ist, und zwar in der Schnittebene zwischen den Teilgefäßen.

3. Transportvorrichtung nach Anspruch 2,
**dadurch gekennzeichnet, dass** die Trägerkonstruktion eine mit Öffnungen versehene Trägerwand (10, 11; 31, 32, 33) umfasst.

4. Transportvorrichtung nach einem der vorstehenden Ansprüche,
**dadurch gekennzeichnet, dass** die Tankkonstruktion mindestens drei im wesentlichen zylindrische Teilgefäße (3, 4, 5; 21, 22, 23, 24) umfasst.

5. Transportvorrichtung nach Anspruch 4,
**dadurch gekennzeichnet, dass** die beiden äußersten Teilgefäße (3, 4; 21, 24) im wesentlichen den gleichen Krümmungsradius aufweisen, der kleiner ist als das dazwischen angeordnete Teilgefäß (4) oder Teilgefäße (22, 23).

6. Transportvorrichtung nach Anspruch 5,
**dadurch gekennzeichnet, dass** der obere Mantelteil des mittigen Teilgefäßes oder der mittigen Teilgefäße einen größeren Krümmungsradius als der Krümmungsradius des jeweils unteren Mantelteils aufweist.

7. Transportvorrichtung nach einem der vorstehenden Ansprüche,
**dadurch gekennzeichnet, dass** die Schnittebene zwischen zwei benachbarten Teilgefäßen einen Winkel von ungefähr 0 bis 30° zur vertikalen Ebene einnimmt.

8. Transportvorrichtung nach einem der vorstehenden Ansprüche,
**dadurch gekennzeichnet, dass** die Oberseiten der Teilgefäße im wesentlichen in der gleichen horizontalen Ebene angeordnet sind und so eine Stütze für die Plattform bilden.

9. Transportvorrichtung nach einem der vorstehenden Ansprüche,
**dadurch gekennzeichnet, dass** die Tankkonstruktion im wesentlichen symmetrisch relativ zu der vertikalen Längsebene ist, die in der Mitte der Breitenausdehnung gelegen ist.

10. Transportvorrichtung nach einem der vorstehenden Ansprüche,
**dadurch gekennzeichnet, dass** das äußerste Teilgefäß (3, 5; 21, 24) mit dem benachbarten Teilgefäß (4; 22, 23) im Bereich des im Bereich von ungefähr 90 bis 180° liegenden Sektors des äußersten Teilgefäßes verbunden ist.

## Revendications

1. Dispositif de transport comprenant une plate-forme (2) pour des marchandises à transporter et une construction de réservoir (1 ; 20) sous la plate-forme pour la matière liquide à transporter, **caractérisé en ce que** la construction de réservoir (1 ; 20) comprend au moins deux cuves partielles parallèles sensiblement cylindriques et horizontales (3, 4, 5 ; 21, 22, 23, 24), des cuves partielles adjacentes se croisant sur leur longueur et étant raccordées entre elles au niveau de leurs points d'intersection (6, 7, 8, 9 ; 25, 26, 27, 28, 29, 30), et **en ce que** ladite plate-forme (2 ; 34) repose contre la construction de réservoir.

2. Dispositif de transport selon la revendication 1, **caractérisé en ce qu'**une construction de support (10, 11 ; 31, 32, 33) est fournie à l'intérieur de la construction de réservoir dans le plan de cisaillement entre les cuves partielles.

3. Dispositif de transport selon la revendication 2, **caractérisé en ce que** la construction de support comprend une paroi de support (10, 11 ; 31, 32, 33) munie d'ouvertures.

4. Dispositif de transport selon l'une quelconque des revendications précédentes, **caractérisé en ce que** la construction de réservoir comprend au moins trois cuves partielles sensiblement cylindriques (3, 4, 5 ; 21, 22, 23, 24).

5. Dispositif de transport selon la revendication 4, **caractérisé en ce que** les deux cuves partielles les plus externes (3, 5 ; 21, 24) ont sensiblement le même rayon de courbure, qui est inférieur au rayon de courbure de la cuve partielle (4) ou des cuves partielles (22, 23) situées entre elles.

6. Dispositif de transport selon la revendication 5, **caractérisé en ce que** la partie de manteau supérieure de la cuve partielle centrale ou des cuves partielles centrales a un rayon de courbure supérieur au rayon de courbure de la partie de manteau inférieure.

7. Dispositif de transport selon l'une quelconque des revendications précédentes, **caractérisé en ce que** le plan de cisaillement entre deux cuves partielles adjacentes forme un angle d'approximativement 0 à 30° avec le plan vertical.

8. Dispositif de transport selon l'une quelconque des revendications précédentes, **caractérisé en ce que** les surfaces supérieures des cuves partielles sont situées sensiblement dans le même plan horizontal, formant ainsi un support pour la plate-forme.

9. Dispositif de transport selon l'une quelconque des revendications précédentes, **caractérisé en ce que** la construction de réservoir est sensiblement symétrique par rapport au plan vertical longitudinal situé au centre dans sa direction latérale.

10. Dispositif de transport selon l'une quelconque des revendications précédentes, **caractérisé en ce que** la cuve partielle la plus externe (3, 5 ; 21, 24) est raccordée à la cuve partielle adjacente (4 ; 22, 23) dans la zone du secteur de la cuve partielle la plus externe, qui est dans la plage d'environ 90 à 180°.
